# EUROPEAN PATENT SPECIFICATION

(11) **EP 3 744 586 B1**
(45) Date of publication and mention of the grant of the patent: **16.03.2022**
(21) Application number: 19177184.9
(22) Date of filing: 29.05.2019
(51) Int. Cl.: B60T 1/00, F16H 63/34, F16D 63/00

(54) **PARK LOCK DEVICE**
PARKSPERRVORRICHTUNG
DISPOSITIF DE VERROUILLAGE DE STATIONNEMENT

(43) Date of publication of application: 02.12.2020
(73) Proprietor: Volvo Car Corporation, 40531 Göteborg (SE)
(72) Inventor: KISIELEWICZ, Rafal, 424 70 Olofstorp (SE); HALL, Tommie, 422 57 Hisings Backa (SE)
(74) Representative: Kransell & Wennborg KB

(56) References cited:
- WO-A1-2018/070056
- DE-A1-102008 011 115
- US-A1- 2018 119 815

## Description

### TECHNICAL FIELD

The present disclosure relates to park lock device configured to be used in a park lock system of a vehicle.

### BACKGROUND

Vehicles having an automatic transmission, or electric vehicles, are provided with a park lock function adapted to lock the output shaft of the automatic transmission or the output shaft of the electric motor, which prevents the vehicle from moving in any direction. A parking pawl prevents the transmission from rotating, and therefore the vehicle from moving. The parking pawl locks the output shaft of the transmission to the transmission casing or the output shaft of the electric motor by engaging a pawl (i.e. a wedge-like element) that engages with a parking gear (a notched wheel) arranged on the output shaft, thereby preventing the gear - and thus the driving wheels - from rotating. The parking pawl will lock the shaft when it is moved in position between two teeth of the parking gear.

The parking pawl is prevented from being engaged during driving or when the vehicle is moving. On a vehicle having an automatic transmission, this may be done by blocking the gear selector until a safe engagement speed for the vehicle is reached. Software may also be used to control that this condition is avoided and that the pawl can only be engaged when the vehicle has come to a standstill.

The components of the park lock systems are typically located in various positions around the output shaft to be locked which makes maintenance and repair of the park lock system difficult.

WO 2018/070056 A1 discloses an in-wheel motor drive device with a park pole provided with convex part engaged with recessed part of park gear, where park gear, park pole, and moving element are accommodated in inside of housing.

### SUMMARY

One objective is to solve, or at least mitigate, this problem and thus to provide an improved park lock device.

In the park lock device according to embodiments, components are placed in one single unit, and the complete park lock device may thus be straightforwardly changed in case of component failure. Advantageously, the park lock device is provided as a single delivery unit in the form of a casing being pre-assembled with a park pawl and a spring arrangement at a supplier which makes the delivery, handling and assembly much easier.

### BRIEF DESCRIPTION OF THE DRAWINGS

Aspects and embodiments are now described, by way of example, with reference to the accompanying drawings, in which:
Figure 1 shows a perspective view of a park lock device according to an embodiment, which park lock device is configured to be used in a park lock system of a vehicle;
Figure 2 shows the park lock device of Figure 1 in a perspective view with a first side wall made transparent;
Figure 3 shows the park lock device of Figure 1 in another perspective view with a second side wall made transparent;
Figure 4 shows the park lock device of Figures 1-3 in a side sectional view, but where an actuator is shown for controlling the park pawl to move into the park lock position;
Figure 5 shows a side sectional view illustrating the park lock device in an embodiment upon interacting with a parking gear of a vehicle to form a park lock system, the park pawl being in park release position;
Figure 6 shows a side sectional view illustrating the park lock device in an embodiment upon interacting with a parking gear of a vehicle to form a park lock system, the park pawl being in park lock position; and
Figure 7 illustrates a vehicle in which the park lock device and park lock system according to embodiments can be implemented.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

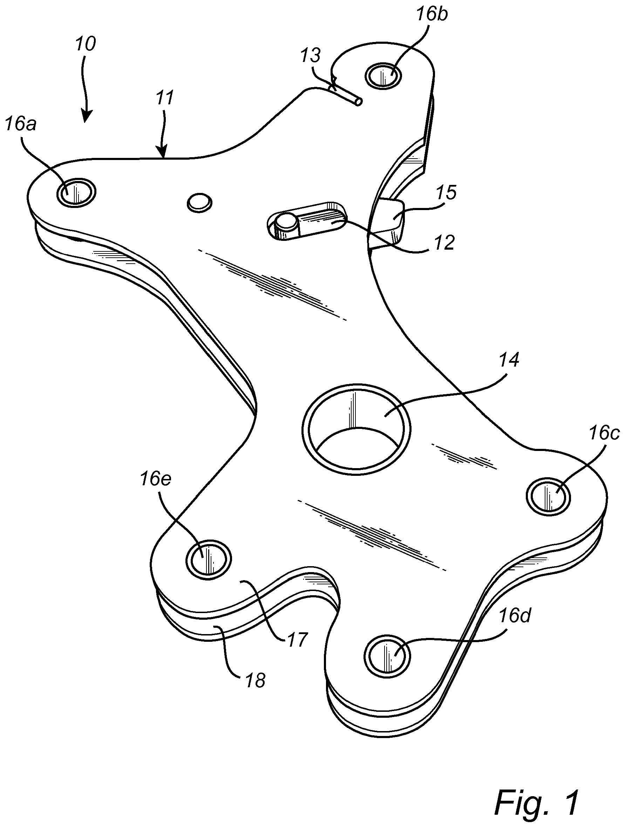

Figure 1 shows a perspective view of a park lock device 10 according to an embodiment, which device 10 is configured to be used in a park lock system of a vehicle as will be described in more detail in the following.

The park lock device 10 comprises a casing 11 accommodating at least a park pawl 12 and a spring arrangement 13. The park pawl 12 is pivotably arranged in the casing 11 around a pivot axis 14.

The park pawl 12 will pivot around the pivot axis 14 to move into the casing in a park release position and out of the casing in a park lock position. Shown in Figure 1 is a lock end 15 of the park pawl 12 which will move into engagement with a space between two teeth of a parking gear of a vehicle to be parked (such as for example a car) when the park pawl 12 is moved into the lock position by an actuator (not shown).

In this particular embodiment, the casing 11 comprises two planar side walls opposing each other with connecting members i6a-e arranged in between to connect the first side wall 17 and the second side wall 18 and further to create an appropriate distance between the first side wall 17 and the second side wall 18.

Further, the connecting members 16a-16e may be provided with through holes further extending through the respective side wall 17, 18 for mounting purposes, i.e. to fasten the park lock device 10 to the vehicle for interaction with remaining parts of the park lock system, by means of e.g. screws or bolts.

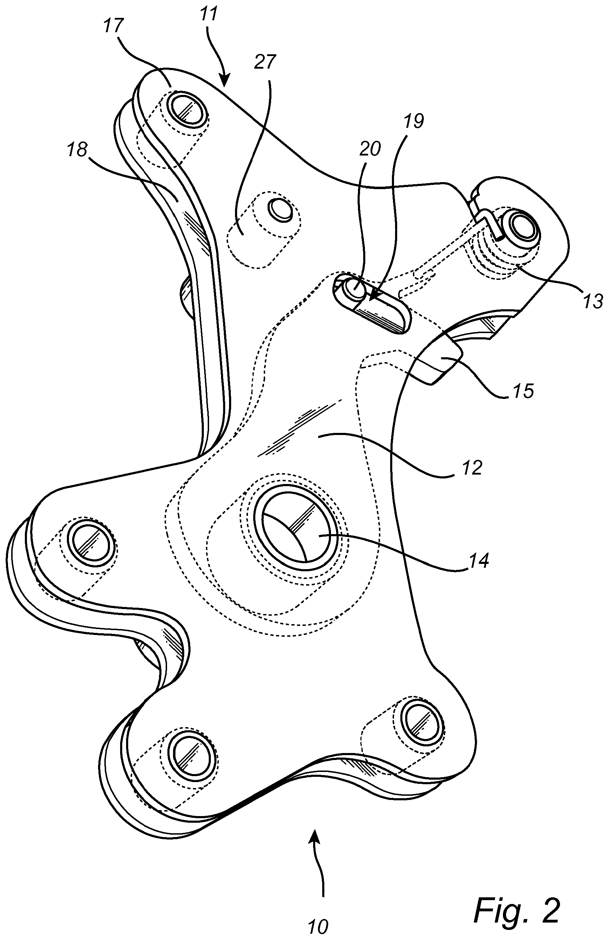

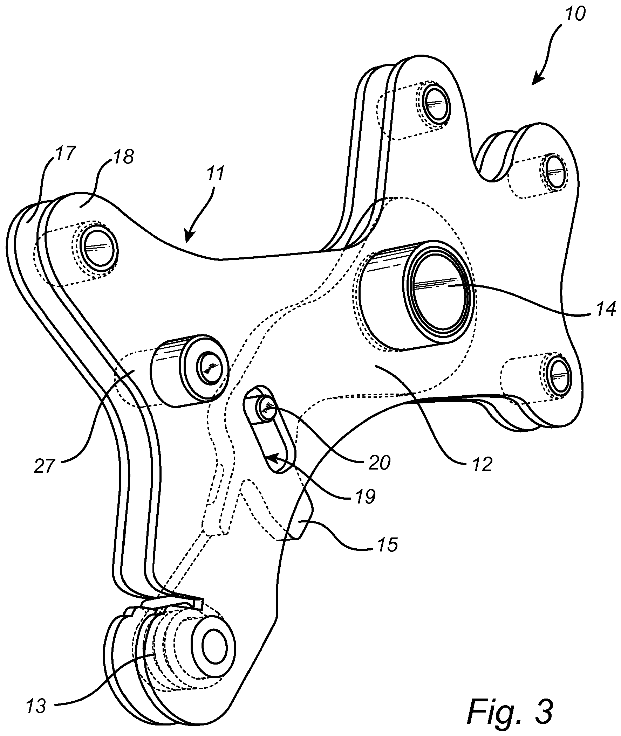

Figure 2 shows the park lock device 10 of Figure 1 in a perspective view with the first side wall 17 made transparent, while Figure 3 shows the park lock device 10 of Figure 1 in another perspective view with the second side wall 18 made transparent,

As can be seen, the park pawl 12 is configured to pivot around the pivot axis 14 to move between the park release position and the park lock position in which the lock end 15 of the park pawl 12 will move into engagement with a space between two teeth of a parking gear.

As will be described in more detail, an actuating member (not shown) will press on the park pawl 12 to have the park pawl 12 pivot around the pivot axis 14, such that the lock end 15 moves downwards out of the casing 11 and into engagement with the parking gear. That is, the actuating member will exert a pressure on the park pawl 12 to have it pivot in a clockwise direction such that the lock end 15 moves in a downward direction.

The spring arrangement 13 is arranged to move the park pawl 12 to the release position - i.e. into the casing 11 - and keep it in the release position upon the actuating member not pressing on the park pawl 12. The spring 13 in Figures 2 and 3 is commonly known as a return spring, which is fixedly attached to the casing 11 in one end and connected to the park pawl 12 in the other and will thus pull the park pawl 12 in an upwards direction when the pressure of the actuating member pressing the park pawl 12 downwards into the park lock position is released.

Optionally, the casing 11 may be arranged with a slot 19 while the park pawl 12 is arranged with a stopping member 20 configured to slide up and down in the slot 19 as the park pawl 12 pivots around the pivot axis 14. The pivotal movement of the park pawl 12 out of the casing 11 is restricted by the stopping member 20 abutting against an end section of the slot 19 in the casing 11.

With the park lock device 10 according to embodiments, packaging and assembly problems of a park lock system is resolved. In the current art, the components of a park lock system are typically located in various positions within the transmission of the vehicle depending on packaging situation.

With the park lock device 10 where the components are placed in one single unit, the complete park lock device 10 may straightforwardly be changed in case of component failure. Advantageously, the park lock device 10 is provided as a single delivery unit in the form of the casing 11 being pre-assembled with the park pawl 12 and the spring arrangement 13 at the supplier which makes the delivery, handling and assembly much easier. The park lock device 10 can also be mounted on a flat surface as a result of the one or more planar side walls 17, 18 of the casing 11, which can be particularly useful in case of planetary transmissions.

Further, an actuator support member 27 will be used to assist the actuating member in exerting a force onto the park pawl 12 to pivot in a clockwise direction and hence to cause the lock end 15 to move downwards. The actuator support member 27 may, or may not, be mounted in the casing 11, as will be discussed in more detail hereinbelow.

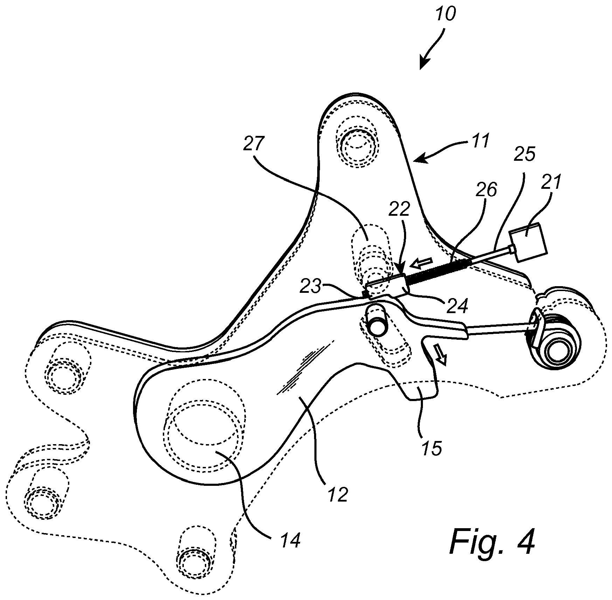

Figure 4 shows the park lock device 10 of Figures 1-3 in a side sectional view, but where an actuator 21 is shown for controlling the park pawl 12 to move into the park lock position. As can be seen, on the actuator 21, an actuating member 22 is arranged comprising a body with a release section 23 and a lock section 24.

As is understood, the casing 11 of the park lock device 10 according to an embodiment requires an opening via which the actuator rod 25 and the actuating member 22 can be inserted into the park lock device 10. As can be seen in Figures 1-3, there is no wall attaching the side walls 17, 18 to each other, so the actuator rod 25 and the actuating member 22 can easily be inserted into the park lock device 10 from any direction. As can be seen in Figure 4, the actuating member 22 is inserted into the casing 11 from a right-hand side.

The actuating member 22 is arranged on an actuator rod 25 which runs through a longitudinal hole through the actuating member 22. The actuating member 22 is able to slide on the actuator rod 25 and is pushed to the end of the actuator rod 25 by an actuator spring 26. The actuator rod 25 is controlled by the actuator 21, which may be e.g. an electromagnetic solenoid or a rotating motor. The actuator 21 is controlled by a control system of the vehicle in which the park lock system is arranged and is activated when a transmission shift selector is placed in park position, or when an electric vehicle is parked.

As previously mentioned, in case the actuating member 22 of the type shown in Figure 4 is utilized, the casing 11 of the park lock device 10 will in an embodiment comprise an actuator support member 27 to allow the actuating member 22 to force the park pawl 12 to pivot in a clockwise direction and hence to cause the lock end 15 to move downwards. In other words, the spring force of the actuator spring 26 will overcome the force of the return spring 13 and the friction of the park pawl 12.

However, it may also be envisaged that the actuator support member 27 is mounted outside the park lock device 10 at a transmission housing of the vehicle and that the casing 11 of the park lock device 10 comprises an opening in which the external actuator support member 27 is inserted.

An advantage of including the actuator support member 27 inside the casing 11 is that still a further component is comprised in the park lock device 10, wherein the casing 11 can be pre-assembled with the park pawl 12, the spring arrangement 13 and the actuator support member 27 at the supplier which makes the delivery, handling and assembly much easier.

The surface of the actuator support member 27 should preferably be low-frictional to facilitate back-and-forth movement of the actuating member 22 thereby moving the park pawl 12 in and out of the park lock position. In an embodiment, the actuator support member 27 could even be a support roller to even further decrease the friction against the actuating member 22.

Hence, when the release section 23 of the actuating member 22 is located between the actuator support member 27 and the park pawl 12, i.e. where the actuating member 22 does not exert any pressure on the park pawl 12, the spring arrangement 13 holds the park pawl 12 in the park release position. However, upon the actuating member 22 being controlled by the actuator 21 to move in a left-hand direction, such that the lock section 24 moves into position between the actuator support member 27 and the park pawl 12, the lock section 24 in cooperation with the actuator support member 27 will force the park pawl 12 to pivot in a clockwise direction such that the lock end 15 moves in a downward direction.

It should be noted that a great force acts on the park pawl 12 and thus the actuating member 22 and the actuator support member 27 when the park pawl 12 is forced upwards upon the vehicle for instance being parked in a slope where the weight of vehicle effectively acts on the park pawl 12.

The actuator support member 27 will bear against an upper bearing surface of the actuating member 22 and will provide a support when pushing the park pawl 12 into the park lock position. The actuator support member 27 will also bear against the actuating member 22 when the park pawl 12 is in the park release position, where the actuating member 22 is pushed towards the actuator support member 27 by the return spring 13. The actuator support member 27 must be able to withstand the radial force acting on it from the park pawl 12 and the parking gear when the vehicle is parked in a slope. Since the system is adapted to be self-opening, i.e. the park pawl 12 will exit the parking gear when the lock section 24 of the actuating member 22 is removed from the park pawl 12, there is a radial force acting on the actuator support member 27.

Low friction between the park pawl 12, the actuating member 22 and the actuator support member 27 will thus facilitate movement of the actuating member 22 in a right-hand direction as the force required to move the actuating member 22 into the park release position is decreased.

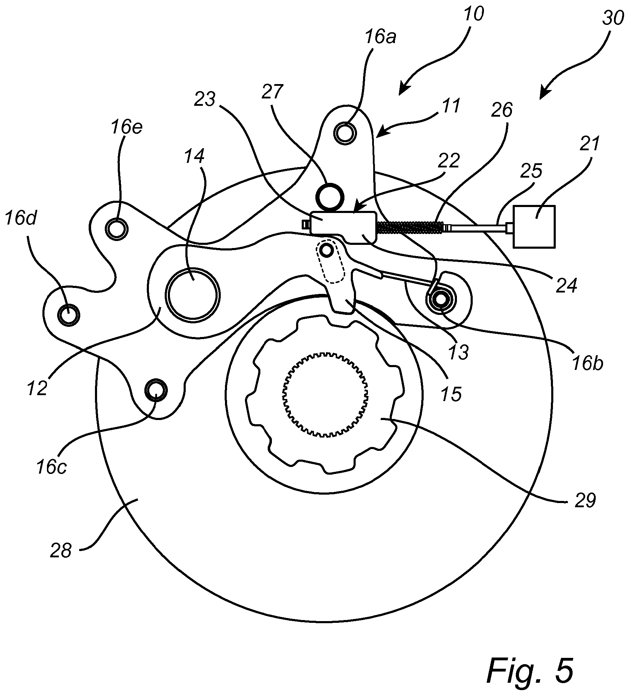

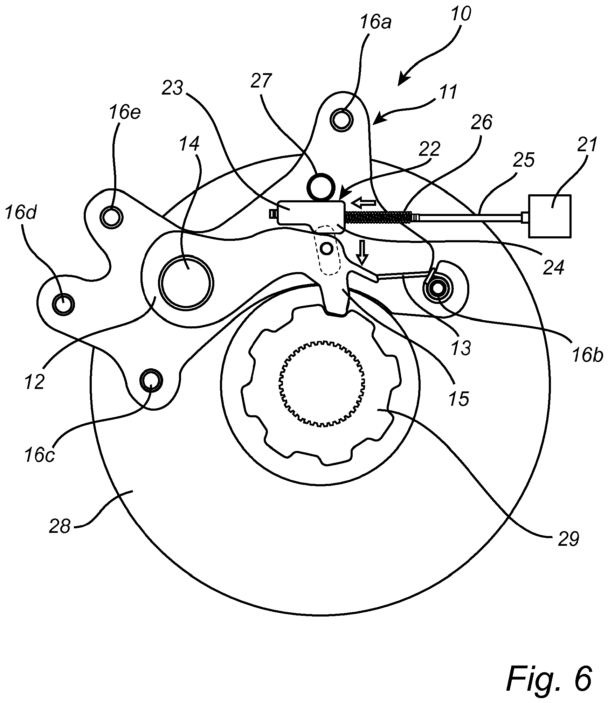

Figures 5 and 6 show side sectional views illustrating the park lock device 10 in an embodiment upon interacting with a transmission housing 28 and a parking gear 29 of a vehicle, such as a car, to form a park lock system 30. The park lock device 10 is typically mounted to the transmission housing via the through holes of the connecting members i6a-e. Therefore, it is advantageous that the side wall of the casing 11 facing the transmission housing 28 (or both side walls) is planar, since the surface of the transmission housing 28 also typically is planar, or close to planar.

As can be seen in Figure 5, the actuating member 22 does not exert any force on the park pawl 12 and the park pawl 12 is thus held in the park release position by the return spring 13.

However, as shown in Figure 6, upon the actuator 21 controlling the actuator rod 25 and the actuator spring 26 to push the actuating member 22 in a left-hand direction, thereby causing the lock section 24 of the actuating member 22 to press the park pawl 12 to pivot in a clockwise direction and the lock end 15 to move downwards, the park pawl moves to the park lock position.

The lock end 15 of the park pawl 12 will thus engage with a space between two teeth of the parking gear 29 and the parking lock of the vehicle is activated. When the actuating member 22 is moved from the park release position to the park lock position and the park pawl 12 is positioned such that the lock end 15 will bear on a top surface of a tooth of the parking gear 29, the park pawl 12 cannot be pushed down between the teeth of the parking gear 29. The park pawl 12 will be pushed down somewhat, and the lock section 24 of the actuating member 22 will bear on the park pawl 12. The actuator spring 26 will be compressed, and the actuator rod 25 will partly slide through the opening in the actuating member 22. If the vehicle moves slightly, the parking gear 29 will rotate some degrees such that the park pawl 12 will be pushed down between the teeth of the parking gear 29 by the actuating member 22.

The park pawl 12 is preferably made from a metal and may e.g. be made of forged steel or sintered steel. The park pawl 12 must be able to withstand the forces from the parking gear 29 when the vehicle is parked e.g. in a slope.

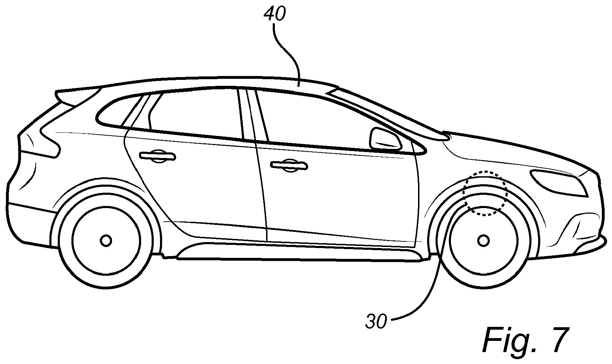

Figure 7 illustrates a vehicle in the form of a car 40 in which the park lock system 30 according to embodiments may be implemented.

## Claims

1. Park lock device (10) configured to be used in a park lock system (30) of a vehicle (40), the park lock device (10) comprising:
a casing (11) accommodating:
a park pawl (12) pivotably arranged in the casing (11) and being configured to be controlled to move to a park lock position by an actuating member (22) causing the park pawl (12) to pivot; and
a spring arrangement (13) arranged to move the park pawl to a release position upon the actuating member (22) not causing the park pawl (12) to pivot, **characterised in that** the park pawl (12) is configured to move in to the casing in the park release position and out of the casing in the park lock position.

2. The park lock device (10) of claim 1, wherein the spring arrangement (13) comprises a return spring configured to be attached to the park pawl (12) in one end and attached to the casing (11) in another end.

3. The park lock device (10) of claims 1 or 2, wherein the casing (11) comprises two opposing side walls (17, 18) attached to each other by a plurality of connecting members (16a-16e), the casing (11) being arranged with an opening where the actuating member (22) is configured to be inserted into the casing (11) for causing the park pawl (12) to pivot.

4. The park lock device (10) of claim 3, the connecting members (16a-16e) being configured with through holes for mounting the park lock device (10) in the vehicle (40).

5. The park lock device (10) of any one of the preceding claims, further comprising:
an actuator support member (27) against which the actuating member (22) is configured to bear.

6. The park lock device (10) of claim 5, the actuator support member (27) further comprising:
a roller against which the actuating member (22) is configured to bear.

7. The park lock device (10) of claims 5 or 6, the actuator support member (27) being configured to be accommodated in the casing (11).

8. The park lock device (10) of claims 5 or 6, the actuator support member (27) being configured to be mounted in the vehicle (40) externally to the casing (11), wherein the casing (11) is arranged with an opening where the actuator support member (27) is configured to be inserted into the casing (11).

9. The park lock device (10) of any one of the preceding claims, wherein at least one of the two side walls (17, 18) are configured to be planar.

10. The park lock device (10) of any one of the preceding claims, wherein the park pawl (12) comprises a lock end (15) configured to move into engagement with a space between two teeth of a parking gear (29) of the vehicle upon the park pawl (12) being moved into the lock position by the actuating member (22).

11. The park lock device (10) of any one of the preceding claims, the casing (11) further comprising a slot (19) and the park pawl (12) further comprising a stopping member (20) being configured to slide in the slot (19) of the casing (11) between two end sections of the slot (19) as the park pawl (12) moves in and out of the casing (11).

12. A park lock system (30) comprising the park lock device (10) of any one of the preceding claims, further comprising an actuator (21) to which the actuating member (22) is connected for causing the park pawl (12) of the park lock device (10) to pivot.

13. The park lock system (30) of claim 12, wherein the actuating member (22) is configured to move horizontally from a first position to a second position for controlling the park pawl (12) to pivotally move to the park lock position and configured to move horizontally from the second position to the first position for controlling the park pawl (12) to pivotally move to the park release position.

14. The park lock system (30) of any one of claims 12 or 13, wherein the park pawl (11) comprises a lock end (15) configured to move into engagement with a space between two teeth of a parking gear (29) of the vehicle (40) upon the park pawl (12) being moved into the park lock position by the actuating member (22).

15. A vehicle (40) comprising the park lock system (30) of any one of claims 12-14.

## Patentansprüche

1. Parksperrvorrichtung (10), dazu ausgelegt, in einem Parksperrsystem (30) eines Fahrzeugs (40) verwendet zu werden, wobei die Parksperrvorrichtung (10) Folgendes umfasst:
ein Gehäuse (11), in dem Folgendes aufgenommen ist:
eine Sperrklinke (12), schwenkbar angeordnet im Gehäuse (11) und dazu ausgelegt, gesteuert zu werden, um sich in eine Parksperrposition zu bewegen, durch ein Betätigungselement (22), das die Sperrklinke (12) veranlasst, sich zu drehen; und
eine Federanordnung (13), angeordnet zum Bewegen der Sperrklinke in eine Freigabeposition, wenn das Betätigungselement (22) die Sperrklinke (12) nicht veranlasst, sich zu drehen, **dadurch gekennzeichnet, dass** die Sperrklinke (12) dazu ausgelegt ist, sich in der Parkfreigabeposition in das Gehäuse und in der Parksperrposition aus dem Gehäuse zu bewegen.

2. Parksperrvorrichtung (10) nach Anspruch 1, wobei die Federanordnung (13) eine Rückholfeder umfasst, die dazu ausgelegt ist, in einem Ende an der Sperrklinke (12) befestigt zu sein und in einem anderen Ende am Gehäuse (11) befestigt zu sein.

3. Parksperrvorrichtung (10) nach Anspruch 1 oder 2, wobei das Gehäuse (11) zwei einander gegenüberliegende Seitenwände (17, 18) umfasst, die durch mehrere Verbindungselemente (16a-16e) aneinander befestigt sind, wobei das Gehäuse (11) mit einer Öffnung angeordnet ist, wobei das Betätigungselement (22) dazu ausgelegt ist, in das Gehäuse eingesetzt (11) zu werden, um die Sperrklinke (12) zu veranlassen, sich zu drehen.

4. Parksperrvorrichtung (10) nach Anspruch 3, wobei die Verbindungselemente (16a-16e) mit Durchgangslöchern zum Montieren der Parksperrvorrichtung (10) im Fahrzeug (40) ausgelegt sind.

5. Parksperrvorrichtung (10) nach einem der vorhergehenden Ansprüche, die ferner Folgendes umfasst: ein Aktuatorstützelement (27), wobei das Betätigungselement (22) dazu ausgelegt ist, an diesem anzuliegen.

6. Parksperrvorrichtung (10) nach Anspruch 5, wobei das Aktuatorstützelement (27) ferner Folgendes umfasst:
eine Rolle, wobei das Betätigungselement (22) dazu ausgelegt ist, an dieser anzuliegen.

7. Parksperrvorrichtung (10) nach Ansprüchen 5 oder 6, wobei das Aktuatorstützelement (27) dazu ausgelegt ist, in dem Gehäuse (11) aufgenommen zu werden.

8. Parksperrvorrichtung (10) nach Ansprüchen 5 oder 6, wobei das Aktuatorstützelement (27) dazu ausgelegt ist, im Fahrzeug (40) außerhalb des Gehäuses (11) montiert zu werden, wobei das Gehäuse (11) mit einer Öffnung angeordnet ist, durch die das Aktuatorstützelement (27) ausgelegt ist, in das Gehäuse (11) eingesetzt zu werden.

9. Parksperrvorrichtung (10) nach einem der vorhergehenden Ansprüche, wobei zumindest eine der zwei Seitenwände (17, 18) dazu ausgelegt ist, planar zu sein.

10. Parksperrvorrichtung (10) nach einem der vorhergehenden Ansprüche, wobei die Sperrklinke (12) ein Sperrende (15) umfasst, dazu ausgelegt, sich in Eingriff mit einem Raum zwischen zwei Zähnen eines Parkzahnrades (29) des Fahrzeugs zu bewegen, wenn die Sperrklinke (12) durch das Betätigungselement (22) in die Sperrposition bewegt wird.

11. Parksperrvorrichtung (10) nach einem der vorhergehenden Ansprüche, wobei das Gehäuse (11) ferner einen Schlitz (19) umfasst und wobei die Sperrklinke (12) ferner ein Anschlagselement (20) umfasst, das dazu ausgelegt ist, zwischen zwei Endabschnitten des Schlitzes (19) in den Schlitz (19) des Gehäuses (11) zu gleiten, wenn sich die Sperrklinke (12) in das Gehäuse (11) und aus diesem heraus bewegt.

12. Parksperrsystem (30), umfassend die Parksperrvorrichtung (10) nach einem der vorhergehenden Ansprüche, ferner umfassend einen Aktuator (21), mit dem das Betätigungselement (22) verbunden ist, um die Sperrklinke (12) der Parksperrvorrichtung (10) zu veranlassen, sich zu drehen.

13. Parksperrsystem (30) nach Anspruch 12, wobei das Betätigungselement (22) dazu ausgelegt ist, sich horizontal von einer ersten Position zu einer zweiten Position zu bewegen, um die Sperrklinke (12) zu steuern, sich drehend in die Parksperrposition zu bewegen, und dazu ausgelegt, sich horizontal aus der zweiten Position in die erste Position zu bewegen, um die Sperrklinke (12) zu steuern, sich drehend in die Parkfreigabeposition zu bewegen.

14. Parksperrsystem (30) nach einem der Ansprüche 12 oder 13, wobei die Sperrklinke (11) ein Sperrende (15) umfasst, dazu ausgelegt, sich in Eingriff mit einem Raum zwischen zwei Zähnen eines Parkzahnrades (29) des Fahrzeugs (40) zu bewegen, wenn die Sperrklinke (12) durch das Betätigungselement (22) in die Parksperrposition bewegt wird.

15. Fahrzeug (40) umfassend das Parksperrsystem (30) nach einem der Ansprüche 12-14.

## Revendications

1. Dispositif de verrouillage de stationnement (10) configuré de façon à être utilisé dans un système de verrouillage de stationnement (30) d'un véhicule (40), ce dispositif de verrouillage de stationnement (10) comprenant :
un boîtier (11) contenant :
un cliquet de stationnement (12) disposé dans le boîtier (11) de manière pivotante et étant configuré de façon à être commandé pour se mettre dans une position de verrouillage de stationnement par un élément d'actionnement (22) qui fait pivoter le cliquet de stationnement (12) ; et
un dispositif à ressort (13) agencé de façon à mettre le cliquet de stationnement dans une position de dégagement lorsque l'élément d'actionnement (22) ne fait pas pivoter le cliquet de stationnement (12), **caractérisé en ce que** le cliquet de stationnement (12) est configuré de façon à entrer dans le boîtier pour se mettre dans la position de dégagement de stationnement et à sortir du boîtier de la position de verrouillage de stationnement.

2. Dispositif de verrouillage de stationnement (10) selon la revendication 1, dans lequel le dispositif à ressort (13) comporte un ressort de rappel configuré de façon à être attaché au cliquet de stationnement (12) à une extrémité et à être attaché au boîtier (11) à une autre extrémité.

3. Dispositif de verrouillage de stationnement (10) selon la revendication 1 ou 2, dans lequel le boîtier (11) comporte deux parois latérales opposées (17, 18) attachées l'une à l'autre par une pluralité d'éléments de raccordement (16a-16e), le boîtier (11) étant pourvu d'une ouverture où, selon sa configuration, l'élément d'actionnement (22) est inséré dans le boîtier (11) pour faire pivoter le cliquet de stationnement (12).

4. Dispositif de verrouillage de stationnement (10) selon la revendication 3, les éléments de raccordement (16a-16e) étant configurés avec des trous traversants pour monter le dispositif de verrouillage de stationnement (10) dans le véhicule (40).

5. Dispositif de verrouillage de stationnement (10) selon l'une quelconque des revendications précédentes, comprenant en outre :
un élément de support d'actionneur (27) contre lequel l'élément d'actionnement (22) s'appuie, selon sa configuration.

6. Dispositif de verrouillage de stationnement (10) selon la revendication 5, l'élément de support d'actionneur (27) comprenant en outre :
un rouleau contre lequel l'élément d'actionnement (22) s'appuie, selon sa configuration.

7. Dispositif de verrouillage de stationnement (10) selon la revendication 5 ou 6, l'élément de support d'actionneur (27) étant configuré de façon à être logé dans le boîtier (11).

8. Dispositif de verrouillage de stationnement (10) selon la revendication 5 ou 6, l'élément de support d'actionneur (27) étant configuré de façon à être monté dans le véhicule (40) extérieurement au boîtier (11), le boîtier (11) étant pourvu d'une ouverture où l'élément de support d'actionneur (27) est inséré dans le boîtier (11), selon sa configuration.

9. Dispositif de verrouillage de stationnement (10) selon l'une quelconque des revendications précédentes, dans lequel au moins une des deux parois latérales (17, 18) est configurée de façon à être plane.

10. Dispositif de verrouillage de stationnement (10) selon l'une quelconque des revendications précédentes, dans lequel le cliquet de stationnement (12) comporte une extrémité de verrouillage (15) configurée de façon à s'engager avec un espace entre deux dents d'une roue de verrouillage de stationnement (29) du véhicule lorsque le cliquet de stationnement (12) est mis dans la position de verrouillage par l'élément d'actionnement (22).

11. Dispositif de verrouillage de stationnement (10) selon l'une quelconque des revendications précédentes, le boîtier (11) comprenant en outre une fente (19) et le cliquet de stationnement (12) comportant en outre un élément d'arrêt (20) configuré de façon à glisser dans la fente (19) du boîtier (11) entre deux sections extrêmes de la fente (19) tandis que le cliquet de stationnement (12) entre dans le boîtier (11) et en sort.

12. Système de verrouillage de stationnement (30) comprenant le dispositif de verrouillage de stationnement (10) selon l'une quelconque des revendications précédentes, comprenant en outre un actionneur (21) auquel l'élément d'actionnement (22) est raccordé pour faire pivoter le cliquet de stationnement (12) du dispositif de verrouillage de stationnement (10).

13. Système de verrouillage de stationnement (30) selon la revendication 12, l'élément d'actionnement (22) étant configuré de façon à bouger horizontalement d'une première position dans une deuxième position pour commander le cliquet de stationnement (12) afin qu'il se mette dans la position de verrouillage de stationnement par pivotement et étant configuré de façon à bouger horizontalement de la deuxième position dans la première position pour commander le cliquet de stationnement (12) afin qu'il se mette dans la position de dégagement de stationnement par pivotement.

14. Système de verrouillage de stationnement (30) selon l'une quelconque des revendications 12 ou 13, dans lequel le cliquet de stationnement (11) comporte une extrémité de verrouillage (15) configurée de façon à s'engager avec un espace entre deux dents d'une roue de verrouillage de stationnement (29) du véhicule (40) lorsque le cliquet de stationnement (12) est mis dans la position de verrouillage par l'élément d'actionnement (22).

15. Véhicule (40) comportant un système de verrouillage de stationnement (30) selon l'une quelconque des revendications 12 à 14.
